# EUROPEAN PATENT SPECIFICATION

(11) **EP 1 812 516 B1**
(45) Date of publication and mention of the grant of the patent: **23.09.2009**
(21) Application number: 05784156.1
(22) Date of filing: 10.08.2005
(51) Int. Cl.: C08L 95/00

(54) **POLYMERS AND THEIR USE IN ASPHALT COMPOSITIONS AND ASPHALT CONCRETES**
POLYMERE UND IHRE VERWENDUNG IN ASPHALTMASSEN UND ASPHALTBETONEN
POLYMERES ET LEUR UTILISATION DANS DES COMPOSITIONS ET BETONS ASPHALTIQUES

(30) Priority: 02.10.2004 US 615438 P
(43) Date of publication of application: 01.08.2007
(73) Proprietor: Firestone Polymers, LLC, Akron, Ohio 44301 (US)
(72) Inventor: GRAVES, Daniel, Canal Fulton, OH 44614 (US); BOERNER, Peter, Massillon, OH 44646 (US)
(74) Representative: Albrecht, Thomas
(86) International application number: PCT/US2005/028343
(87) International publication number: WO 2006/041560

(56) References cited:
- WO-A-02/060970
- CA-A1- 2 354 750
- DE-U1- 20 310 484
- US-A- 5 130 354

## Description

### FIELD OF THE INVENTION

This invention relates to polymers and their use in asphalt compositions and asphalt concretes.

### BACKGROUND OF THE INVENTION

It is known to combine bitumen compositions, particularly asphalt compositions, with aggregate to form compositions that are useful in the preparation of road surfaces. The mixture of asphalt and aggregate may be referred to as asphalt concrete. The asphalt serves as a binder for the aggregate. Interaction between the binder and the aggregate is therefore desirable.

The asphalt may itself be reinforced or modified with a polymer. The polymer can improve many properties of the asphalt such as penetration, softening point, toughness, tenacity, and heat resistance. Known polymers or polymeric additives include symmetric radical block copolymers comprising arms having diene polymer blocks and vinyl aromatic polymer blocks; block copolymers of a monoalkenyl aromatic hydrocarbon monomer and a conjugated diolefin; olefin homopolymers and copolymers, particularly 1-butene homopolymer and copolymer; and isoolefin homopolymers.
Among the prior art, US 5,130,354 describes a bituminous composition comprising a bituminous component and a silane functionalized polymer or an acid functionalized polymer of a conjugated diolefin, and DE 20310484 U1 discloses a polymer-modified bitumen, in which the modifying polymer is a mixture of tri-block poly(styrene-butadiene-styrene) copolymer and di-block poly(styrene-butadiene) polymer.

While asphalt concretes have proven useful in the preparation of road surfaces, failure is, however, inevitable. Failures generally occur through bleeding, fatting up, crackling, and chip loss. The time until failure varies with several factors such as the amount and weight of traffic and various weather factors such as temperature and rainfall. Unfortunately, failure frequently occurs at shorter time intervals than desired.

There is therefore a continued need to improve the asphalt compositions and asphalt concretes.

### SUMMARY OF THE INVENTION

In general the present invention provides a modified asphalt composition comprising a naphthenic asphalt, and a high-vinyl block copolymer.

The present invention further provides a modified asphalt composition comprising the product of combining a naphthenic asphalt, and a block copolymer including a block comprising diene units characterized by having a vinyl content of at least 15% by weight.

The present invention still further provides a method of preparing a modified asphalt composition comprising combining a naphthenic asphalt and the above block copolymer.

The present invention further includes an asphalt concrete comprising an asphalt, a functionalized block copolymer, and a siliceous aggregate.

The present invention also includes an asphalt concrete comprising the product of combining an asphalt, a functionalized block copolymer, and a siliceous aggregate.

The present invention further includes a diblock copolymer comprising a vinyl block comprising conjugated vinyl aromatic units, a diene block comprising conjugated diene units and substantially devoid of a tapered block section between the vinyl block and the diene block wherein the diblock copolymer comprises a vinyl content of at least 20%, and a molecular weight of at least 50,000.

The present invention still further includes a method of preparing the diblock copolymer comprising anionically polymerizing a first charge of diene monomer with a functionalized initiator in the presence of a vinyl modifier thereby forming a polymer having a vinyl content, and whereby said polymerizing comprises consumption of substantially all of said diene monomer, and polymerizing a second charge of vinyl aromatic monomer in the presence of said polymer forming a diblock copolymer comprising a diene block and a vinyl block, whereby said diblock copolymer comprises a vinyl content of at least 20%, and a molecular weight of at least 50,000.

### DETAILED DESCRIPTION OF ILLUSTRATIVE EMBODIMENTS

In a first embodiment, the invention provides a modified asphalt composition that includes a naphthenic asphalt and a block copolymer including a block comprising diene units characterized by having a vinyl content of at least 15% by weight.
This modified asphalt composition can be used to prepare asphalt concretes that are especially useful for paving roadways, highways, exit ramps, streets, driveways, parking lots, airport runways or airport taxiways utilizing conventional procedures.

It has been unexpectedly discovered that the mixture or combination of naphthenic asphalt and the above block copolymer overcomes some of the shortcomings associated with modifying naphthenic asphalts. In particular, surprisingly good results have been observed as compared to asphalts modified with conventional block copolymers when these compositions are subjected to the Softening Point Separation Test, which is preferred under the Superpave System of the Strategic Highway Research Program. It is believed that the block copolymer including a block comprising diene units characterized by having a vinyl content of at least 15% by weight
and the naphthenic asphalt synergistically interact to provide these advantageous results. This is especially advantageous because naphthenic asphalt sources are strategically located around the globe and conventional block copolymers have proven to have a high degree of separation from these naphthenic asphalts.

Asphalts include bitumens that occur in nature or are obtained in petroleum processing. Asphalts typically contain very high molecular weight hydrocarbons called asphaltenes, which are soluble in carbon disulfide, pyridine, aromatic hydrocarbons, chlorinated hydrocarbons, and THF. Asphalts or bituminous materials are typically solids, semi-solids or liquids, and a penetration test is typically employed for consistency or viscosity. In this classification, solid materials are those having a penetration at 25°C under a load of 100 grams applied for 5 seconds, of not more than 10 decimillimeters (1 millimeter). Semi-solids are those having a penetration at 25°C under a load of 100 grams applied for 5 seconds of more than 10 decimillimeters (i millimeter) and a penetration at 25°C under a load of 50 grams applied for 1 second of not more than 35 millimeters.

Naphthenic asphalt or bitumens are generally characterized by including a net excess of acidic compounds. Preferably, the acid value (mg KOH/g) is about 1.5 to about 5. The base value (mg KOH/g) of naphthenic bitumens is preferably from about o to about 1.

One particularly useful source of naphthenic asphalt is obtained from China and the coastal regions thereof. Other sources of naphthenic asphalt include those obtained from South and Central America.

The above block copolymer is preferably a diblock copolymer that includes one block including vinyl aromatic units and one block including diene units characterized by having a vinyl content of at least 15% by weight.
The vinyl aromatic block preferably includes vinyl aromatic units deriving from vinyl aromatic monomer. Useful vinyl aromatics include those having 8 to about 20 carbon atoms such as styrene, α-methylstyrene, *p*-methylstyrene, vinyl anthracene, and vinyl naphthalene; styrene is the preferred vinyl aromatic. The diene block preferably includes diene units deriving from conjugated dienes. Suitable conjugated dienes include those having from about 4 to about 12 carbon atoms such as 1,3-butadiene, 1,3-cyclohexadiene, isoprene, 1,3-pentadiene, 1,3-hexadiene, 2,3-dimethyl-1,3-butadiene, 2-ethyl-1,3-butadiene, 2-methyl-1,3 pentadiene, 3-methyl-1,3-pentadiene, 4-methyl-1,3-pentadiene, and 2,4-hexadiene; 1,3-butadiene is the preferred conjugated diene. The block copolymer may include a tapered section, which includes both styrene and butadiene units. In preferred embodiments, the tapered section is minimized; in other words, the block copolymer includes less than 5% by weight, more preferably less than 3% by weight, and even more preferably less than 1% by weight of a tapered section. In one embodiment, the block copolymer is devoid of a tapered section.

The above block copolymer is generally characterized by having a weight average molecular weight of at least 50 kg/mol, preferably at least about 75 kg/mol, more preferably at least about 100 kg/mol, and even more preferably at least about 125 kg/mol; also, the block copolymer has a weight average molecular weight that is 500 kg/mol or less, preferably 250 kg/mol or less, more preferably 200 kg/mol or less, and more preferably 150 kg/mol or less, as determined by GPC analysis using polystyrene standards.

The block copolymer is also generally characterized by having a molecular weight distribution that is less than about 2, preferably less than about 1.5, more preferably less than about 1.2, and even more preferably less than about 1.05.

In one embodiment, the above block copolymer includes greater than 10% by weight, in another embodiment, the block copolymer includes greater than 15% by weight, and in another embodiment, greater than 20% by weight, and in yet another embodiment, greater than 23% by weight vinyl aromatic units; also, in one embodiment, the block copolymer includes less than 50% by weight, and in another embodiment, less than 35% by weight, and in another embodiment, less than 30% by weight, and in yet another embodiment, less than 27% by weight vinyl aromatic units. The remainder of the copolymer preferably includes the diene block.

The diene block is characterized by including a vinyl content (*i*.*e*., 1,2 microstructure) that is at least about 15% by weight, preferably at least about 20% by weight, more preferably at least 23% by weight, even more preferably at least about 25% by weight, and still more preferably at least about 27% by weight based upon the weight of the diene content of the block copolymer (i.e., the diene block). Also, in another particular embodiment, this diene block may be characterized by a vinyl content that is preferably 34% by weight or less, more preferably 33% by weight or less, more preferably 32% by weight or less, and still more preferably 31% by weight or less, based upon the weight of the diene content of the block copolymer.

The block copolymer is also generally characterized by having a gel content of less than about 1.5 % by weight, preferably less than about 1.2 % by weight, more preferably less than about 1.0 % by weight, and still more preferably less than about 0.7 % by weight as determined by the amount of insoluble material when a sample is dissolved in toluene at room temperature.

The high-vinyl block copolymers are preferably prepared by anionic, living polymerization techniques. Anionically-polymerized, living polymers are formed by reacting anionic initiators with certain unsaturated monomers to propagate a polymeric structure. Throughout formation and propagation of the polymer, the polymeric structure is anionic and "living." A new batch of monomer subsequently added to the reaction can add to the living ends of the existing chains and increase the degree of polymerization. A living polymer, therefore, is a polymeric segment having a living or reactive end. Anionic polymerization is further described in George Odian, Principles of Polymerization, ch. 5 (3rd Ed. 1991), or Panek, 94 J. Am. Chem. Soc., 8768 (1972).

The preparation technique employed in this embodiment preferably includes polymerization of a first block followed by the sequential polymerization of a second block. As those skilled in the art will appreciate, this sequential polymerization includes charging initiator and monomer that will give rise to the first block, and once the monomer giving rise to the first block is consumed (or consumed to a desired degree), monomer that will give rise to the second block can subsequently be charged.

The diene block can be the first block synthesized or the vinyl aromatic block can be the first block synthesized. In either event, in one embodiment it is preferred that the monomer charged or provided for synthesizing the first block be consumed to an extent such that tapering is limited as defined above. In preferred embodiments, at least 90%, more preferably at least 95%, even more preferably at least 98%, and still more preferably at least 99% of the monomer available or charged to the reactor for synthesizing the first block is consumed prior to charging or providing the monomer for synthesizing the second block.

Any anionic initiator can be employed to initiate the formation and propagation of the living polymers. Useful initiators include functionalized initiators, the residue of which will impart the head of the polymer with a functional group, as well as non-functionalized initiators. Exemplary anionic initiators include, but are not limited to, alkyl lithium initiators such as n-butyl lithium, arenyllithium initiators, arenylsodium initiators, *N*-lithium dihydrocarbon amides, aminoalkyllithiums, and alkyl tin lithiums. Other useful initiators include lithiohexamethyleneimine, *N*-lithiohexamethyleneinzide, N-lithiopyrrolidinide, and *N*-lithiododecamethyleneimide as well as organolithium compounds such as the tri-alkyl lithium adducts of substituted aldimines and substituted ketimines, and *N*-lithio salts of substituted secondary amines Exemplary initiators are also described in the following U.S. Patents: 5,332,810 5,329,005, 5,578,542, 5,393,721, 5,698,646, 5,491,230, 5,521,309, 5,496,940, 5,574,109, 5,786,441, and International Publication No. WO 2004/020475,

The amount of initiator employed in conducting anionic polymerizations can vary widely based upon the desired polymer characteristics. In one embodiment, it is preferred to employ from about 0.1 to about 100, and more preferably from about 0.33 to about 10 mmol of lithium per 100 g of monomer.

Anionic polymerizations may be conducted in a polar solvent such as tetrahydrofuran (THF) or a nonpolar hydrocarbon such as the various cyclic and acyclic hexanes, heptanes, octanes, pentanes, their alkylated derivatives, and mixtures thereof, as well as benzene.

In one embodiment, to control vinyl content within the elastomeric segment, a vinyl modifier may be added to the polymerization ingredients. Amounts range between 0 and 90 or more equivalents per equivalent of lithium. The amount depends on the amount of vinyl desired, the level of styrene employed and the temperature of the polymerization, as well as the nature of the specific vinyl modifier (modifier) employed. Suitable polymerization modifiers include, for example, ethers or amines to provide the desired microstructure and randomization of the comonomer units. In one embodiment, about 30% of the polymer chains have an amine.

Compounds useful as vinyl modifiers include those having an oxygen or nitrogen heteroatom and a non-bonded pair of electrons. Examples include dialkyl ethers of mono and oligo alkylene glycols; "crown" ethers; tertiary amines such as tetramethylethylene diamine (TMEDA); linear THF oligomers. Specific examples of compounds useful as vinyl modifiers include tetrahydrofuran (THF), linear and cyclic oligomeric oxolanyl alkanes such as 2,2-bis(2'-tetrahydrofuryl) propane, di-piperidyl ethane, dipiperidyl methane, hexamethylphosphoramide, *N*-*N*'-dimethylpiperazine, diazabicyclooctane, dimethyl ether, diethyl ether and tributylamine. The linear and cyclic oligomeric oxolanyl alkane modifiers (OOPs) are described in U.S. Pat. No. 4,429,091.

Synthesis of the diene block, particularly synthesis of a polybutadiene block by way of polymerizing 1,3-butadiene, preferably occurs in the presence of a vinyl modifier. While certain modifiers may randomize the copolymer when employed in particular amounts, in one embodiment the amount of vinyl modifier that is used is insufficient to randomize the copolymer. Useful vinyl modifiers include OOPs. Those skilled in the art will be able to readily select the amount of vinyl modifier that will be useful in achieving the desired properties set forth above. For example, when a OOPs vinyl modifier is employed, the amount present within the polymerization is generally from about 0.001 to about 1.0 and based upon the amount of lithium charged into the reactor.

Anionically polymerized living polymers can be prepared by either batch or continuous methods. A batch polymerization is preferably begun by charging monomer and solvent to a suitable reaction vessel, followed by the addition of the vinyl modifier (if employed) and an initiator compound. The vinyl modifier or the initiator may be added in either order to the monomer in the reaction vessel. The reactants are preferably heated to a temperature of from about 20 to about 130°C and the polymerization is allowed to proceed for from about 0.1 to about 24 hours. This reaction preferably produces a reactive polymer having a reactive or living end. Preferably, at least about 30% of the polymer molecules contain a living end. More preferably, at least about 50% of the polymer molecules contain a living end. Even more preferably, at least about 80% contain a living end.

In preferred embodiments, a terminating agent or quenching compound is added to the polymerization medium in order to terminate the polymerization reaction. In general, the addition of these agents or compounds neutralizes the anionic nature of the living polymer. In one embodiment, the polymerization is quenched by the addition of a proton donor that can protonate the living polymer. Exemplary proton donors include isopropyl alcohol. These proton donors typically include non-functionalized terminating or quenching agents that simply provide the terminal end of the polymer with a hydrogen atom. In other embodiments, functionalized terminating agents are employed. These terminating agents typically neutralize the anionic character of the living polymer by adding to the terminal end of the polymer and leave a functional group at the terminal end. Numerous terminating agents are known and practice of this embodiment is not limited by the selection of any particular terminating agent.

After formation of the block copolymer, a processing aid or other optional additives such as oil can be added to the polymer cement. In one particular embodiment, the polymer is oil extended. In another particular embodiment, the polymer is extended to about 10 to 20% extended. Oil extending the polymer is advantageous in that it increases solubility of the polymer during subsequent manufacturing processes, and speeds the rate at which the polymer dissolves during subsequent manufacturing processes such as mixing the polymer and curing agent with asphalt. The block copolymer and other optional ingredients are then isolated from the solvent and are preferably dried. Conventional procedures for desolventization and drying may be employed. In one embodiment, the block copolymer may be isolated from the solvent by steam desolventization or hot water coagulation of the solvent followed by filtration. Residual solvent may be removed by using conventional drying techniques such as oven drying or drum drying. Alternatively, the cement may be directly drum dried.

Curing agents can be added to the modified asphalt compositions of this embodiment. Curing agents often used in asphalt compositions include phenolic resins and elemental sulfur. One preferred curing agent is a bismaleimide curing agent, which is described in U.S. Pat. No. 6,486,236.
Conventional amounts may be employed in practicing this invention.

In one embodiment, a premix includes a curing agent added to the block copolymer without completely curing the polymer. The gel content of the polymer increases as the polymer is cured. The gel content may be indicated by measuring the relative weight of polymer that is insoluble in toluene at room temperature. In one embodiment, the curing agent is added without substantially increasing the gel content of the polymer. In another embodiment, the curative, in solution with hexane, is added to the completed polymerization reaction after the addition of the terminating agent. The polymer and curative are mixed at about 93°C (200°F) for about 5½ minutes. In one particular embodiment, before the solvent is removed and the polymer is dried, the polymer is oil extended. In one particular embodiment the polymer is extended to about 10 to 20% extended. In this embodiment, the curing agent may be present during the extending of the polymer. Oil extending is advantageous in that it increases solubility of the polymer during subsequent manufacturing processes, and speeds the rate : at which the polymer dissolves during subsequent manufacturing processes such as mixing the polymer and curing agent with asphalt.

Suitable curing agents include Sulfur, Santocure (available from Flexsys, of Akron, Ohio), ZnO, Stearic Acid, HVA-2 (available from DuPont of Delaware), Vanax PY (available from R.T. Vanderbilt of Connecticut), Slufasan (available from Flexsys, of Akron, Ohio), and PAXL (available from ATOFina of Philadelphia, PA). In one embodiment, the amount of curing agent is less than about 2%, in another embodiment less than about 1%, in a further embodiment less than about 0.5%, and in yet another embodiment about 0.2%.

A premix is more desirable than mixing the curing agent along with the other components of the PMA because less time is required to mix the premix and asphalt than is required to mix the polymer, asphalt and cure package. Another benefit is that less curing agent is required in the premix than if the curative, asphalt, and polymer are added as separate components. Typically, if the curative and polymer are added to the asphalt as separate components, the end user of the asphalt would mix at least the asphalt, polymer and curative. Another advantage to the premix is that the end user would need to add one fewer ingredient, resulting in less opportunity for error in mixing.

The modified asphalt compositions of this embodiment may also include those other ingredients or constituents that are commonly employed in the industry. For example, the compositions may include anti-stripping compounds, fibers, release agents, and fillers. Some specific examples of additives that can be employed include kaolin clay, calcium carbonate, bentonite clay, sanders dust and cellulose fibers.

The modified asphalt compositions of this embodiment can be prepared by using conventional techniques. This typically includes blending the asphalt with a desired amount of block copolymer at a desired temperature. This mixing step can occur prior to or in conjunction with the addition of a curative or the other additives. In one embodiment, the block copolymer is dissolved in molten asphalt at temperatures greater than about 120 C. Mixing is preferably continued for about 25 to about 400 minutes at a temperature of about 145 to about 205 C (preferably from about 160 to about 193 C). Preferably, a homogeneous mixture is obtained.

The asphalt compositions of this embodiment include at from about 0.1 to about 10 parts by weight (pbw), in another embodiment the asphalt compositions include from about 0.3 to about 5 pbw, and in another embodiment, from about 3 to about 6 pbw of the block copolymer per 100 parts by weight of the asphalt

The modified asphalt compositions of this embodiment may be employed to prepare asphalt concrete compositions that include the modified asphalt and an aggregate. Conventional aggregate that is used in the paving industry can be utilized in the practice of this embodiment. Aggregate typically includes rocks, stones, crushed stone, gravel, sand, silica, or mixtures of one more thereof. Specific examples of aggregates include marble, limestone, basalt, dolomite, sandstone, granite, and quartzite.

Aggregate typically has a wide distribution of particle sizes ranging from dust to golf ball size. The best particle size distribution varies from application to application. In certain embodiments, it may be advantageous to coat the aggregate with latex in accordance with the teachings of U.S. Pat. No. 5,262,240 to improve resistance to stripping by water.

The asphalt concrete, which is prepared by mixing the modified asphalt with aggregate, can be prepared by using standard equipment and procedures. In one or more embodiments, the aggregate is mixed with the asphalt to attain an essentially homogeneous asphalt concrete. For instance, the aggregate can be mixed with asphalt to produce asphalt concrete on a continuous basis in a standard mixer.

When preparing an asphalt concrete, generally from about 1 weight percent to about 10 weight percent of the modified asphalt and from about 90 weight percent to about 99 weight percent aggregate (based on the total weight of the asphalt concrete) is mixed. Preferably, the asphalt concrete contains from about 3 weight percent to about 8 weight percent of the modified asphalt cement and from about 92 weight percent to about 97 weight percent of the aggregate. More preferably, the asphalt concrete contains from about 4 weight percent to about 7 weight percent of the modified asphalt cement and from about 93 weight percent to about 96 weight percent of the aggregate.

In a second embodiment, the invention provides an asphalt concrete composition that includes an asphalt, a functionalized block copolymer, and a siliceous aggregate. This asphalt concrete is especially useful for paving roadways, highways, exit ramps, streets, driveways, parking lots, airport runways or airport taxiways utilizing conventional procedures.

It has been unexpectedly discovered that the use of the functionalized block copolymer can alleviate some of the shortcomings that are associated with the use of siliceous aggregate in preparing asphalt concrete. In particular, the resulting pavement is surprisingly characterized by less cracking and crumbling than similar pavements that employ siliceous aggregated and unfunctionalized block copolymer and unfunctionalized block copolymers. It is believed that the siliceous aggregate synergistically interacts with the functionalized block copolymer to provide these advantageous results. These advantages can prove to be significant inasmuch as many sources of siliceous aggregate can be found around the globe and the use of siliceous aggregate could prove to be technologically useful.

The functionalized block copolymer includes at least one diene block, at least one vinyl aromatic block, and at least one terminal functional group. The functional group may be located at the head or tail of the block copolymer and may be attached to either the diene block or the vinyl aromatic block. In one embodiment, the functionalized block copolymer includes two terminal functional groups positioned at opposite ends of the copolymer. While the block copolymer may include various molecular architectures including triblocks, the preferred functionalized block copolymers include di-blocks that include one elastomeric block and one thermoplastic block.

In one embodiment, the functionalized block copolymer can be defined by the formula I

α-Π-θ-ω

where α is a hydrogen atom or a functional group, IT is a diene block, θ is a vinyl aromatic block, and ω is a hydrogen atom or a functional group, with the proviso that at least one of α or ω is a functional group.

The vinyl aromatic block preferably includes vinyl aromatic units deriving from vinyl aromatic monomer. Useful vinyl aromatics include those having 8 to about 20 carbon atoms such as styrene, α-methylstyrene, p-methylstyrene, vinyl anthracene, and vinyl naphthalene; styrene is the preferred vinyl aromatic. The diene block preferably includes diene units deriving from conjugated dienes. Suitable conjugated dienes include those having from about 4 to about 12 carbon atoms such as 1,3-butadiene, 1,3-cyclohexadiene, isoprene,1,3-pentadiene, 1,3-hexadiene, 2,3-dimethyl-1,3-butadiene, 2-ethyl-1,3-butadiene, 2-methyl-1,3 pentadiene, 3-methyl-1,3-pentadiene, 4-methyl-1,3-pentadiene, and 2,4-hexadiene; 1,3-butadiene is the preferred conjugated diene. The block copolymer may include a tapered section, which includes both styrene and butadiene units. In preferred embodiments, the tapered section is minimized; in other words, the block copolymer includes less than 5% by weight, more preferably less than 3% by weight, and even more preferably less than 1% by weight of a tapered section. In one embodiment, the block copolymer is devoid of a tapered section.

The functionalized block copolymer is generally characterized by having a weight average molecular weight of at least 50 kg/mol, preferably at least about 75 kg/mol, more preferably at least about 100 kg/mol, and even more preferably at least about 125 kg/mol; also, the block copolymer has a weight average molecular weight that is 500 kg/mol or less, preferably 250 kg/mol or less, more preferably 200 kg/mol or less, and more preferably 150 kg/mol or less, as determined by GPC analysis using polystyrene standards.

The block copolymer is also generally characterized by having a molecular weight-distribution that is less than about 2, preferably less than about 1.5, more preferably less than about 1.2, and even more preferably less than about 1.05.

The vinyl block copolymer, in one embodiment, includes greater than 5% by weight, and in one embodiment, greater than 10% by weight, and in another embodiment greater than 20% by weight, and in yet another embodiment, greater than 23% by weight vinyl aromatic units; also, the block copolymer in one embodiment includes less than 45% by weight, and in another embodiment less than 35% by weight, and in another embodiment less than 30% by weight, and in yet another embodiment less than 27% by weight vinyl aromatic units. The remainder of the copolymer preferably includes the diene block.

The diene block includes a vinyl content (*i.e*., 1,2 microstructure) that is at least 15% by weight, and in another embodiment at least 20% by weight, and in another embodiment at least 23% by weight, and in another embodiment at least 25% by weight, and in yet another embodiment at least 27% by weight based upon the entire weight of the functionalized block copolymer. Also, this diene block is characterized by a vinyl content that in one embodiment includes 34% by weight or less, and in another embodiment, 33% by weight or less, and in another embodiment, 32% by weight or less, and in yet another embodiment 31% by weight or less, based on the entire weight of the diene block.

The block copolymer is also generally characterized by having a gel content of less than about 1.5 % by weight, preferably less than about 1.2 % by weight, more preferably less than about 1.0 % by weight, and still more preferably less than about 0.7 % by weight as determined by the amount of insoluble material when a sample is dissolved in toluene at room temperature.

In one or more embodiments, the functional group α or ω includes those groups or substituents that can react or interact with siliceous aggregate. In one embodiment, these groups or substituents are characterized by the ability to chemically bond with the siliceous aggregate. The preferred functional groups include silicon-containing functional groups. Accordingly, a preferred functionalized block copolymer can be defined by the formula II

[Block Copolymer]-Si(R¹)₃

where each R¹ is individually selected from hydrocarbyl, substituted hydrocarbyl, or alkoxy groups. Preferably, at least on R¹ is an alkoxy group. In preferred embodiments, the functional group α or ω includes a silyl group that is attached to the elastomeric block, which is preferably a polybutadiene block.

The hydrocarbyl or substituted hydrocarbyl group includes, but is not limited to, alkyl, cycloalkyl, substituted cycloalkyl, alkenyl, cycloalkenyl, substituted cycloalkenyl, aryl, allyl, substituted aryl, aralkyl, alkaryl, and alkynyl groups, with each group preferably containing from 1 carbon atom, or the appropriate minimum number of carbon atoms to form the group, up to 20 carbon atoms. These hydrocarbyl groups may contain heteroatoms such as, but not limited to, nitrogen, boron, oxygen, silicon, sulfur, and phosphorus atoms.

The alkoxy groups may be defined by the formula OR, where R is a monovalent organic group that is preferably a hydrocarbyl or substituted hydrocarbyl group.

Exemplary silicon-containing groups include trimethoxysilyl, triethoxysilyl, tripropoxysilyl, tri *t*-butyoxysilyl, dimethyoxymethylsilyl, diethoxy ethylsilyl, dipropoxypropylsilyl, tri *t*-butoxybutylsilyl, and triphenoxysilyl groups; the preferred functional group includes triethoxysilyl groups.

The functionalized elastomeric block copolymers are preferably prepared by employing anionic, living-polymerization techniques, which are disclosed above. The functional group can be attached to the copolymer head by use of a functionalized initiator, to the copolymer tail by use of a functional terminating agent, or to both the copolymer head and tail by use of both a functional initiator and a functionalized terminating agent. The functional group is preferably attached to the tail or terminus of the living polymer by employing a functionalized terminating agent. The terminating agent is preferably added after peak polymerization temperature has been achieved for the second charge of monomer (*i.e*., the charge that gives rise to the second block). In preferred embodiments, the terminating agent is added to the polymerization medium within 30 minutes, more preferably within 15 minutes, and even more preferably within 7.5 minutes of the peak polymerization temperature resulting from the second charge of monomer.

Useful terminating agents include, but are not limited to, those represented by the formula

(R¹)_{4-z}Si(OR²)_{z}

where R¹ is independently a halogen or a hydrocarbyl or substituted hydrocarbyl group, each R² is independently a hydrocarbyl or substituted hydrocarbyl group, and z is an integer from 1 to 4. Suitable examples of siloxane terminating agents include tetraalkoxysilanes, alkylalkoxysilanes, arylalkoxysilanes, alkenylalkoxysilanes, and haloalkoxysilanes.

Examples of tetraalkoxysilane compounds include tetramethyl orthosilicate, tetraethyl orthosilicate, tetrapropyl orthosilicate, tetrabutyl orthosilicate, tetra(2-ethylhexyl) orthosilicate, tetraphenyl orthosilicate, tetratoluyloxysilane.

Examples of alkylalkoxysilane compounds include methyltrimethoxysilane, methyltriethoxysilane, methyltri-n-propoxysilane, methyltri-n-butoarysilane, methyltriphenoxysilane, ethyltrimethoxysilane, ethyltriethoxysilane, ethyltri-n-propoxysilane, ethyltri-n-butoxysilane, ethyltriphenoxysilane, dimethyldimethoxysilane, dimethyldiethoxysilane, dimethyldi-n-propoxysilane, dimethyldi-n-butoxysilane, dimethyldiphenoxysilane, diethyldimethoxysilane, diphenyldimethoxysilane, 3-glycidoxypropyltrimethoxysilane (GPMOS), γ-methacryloxy propyl trimethoxysilane.

Examples of arylalkoxysilane compounds include phenyltrimethoxysilane, phenyltriethoxysilane, phenyltri-n-propoxysilane, phenyltri-n-butoxysilane, phenyltriphenoxysilane, and the like.

Examples of alkenylalkoxysilane compounds include vinyltrimethoxysilane, vinyltriethoxysilane, vinyltri-n-propoxysilane, vinyltri-n-butoxysilane, vinyltriphenoxysilane, allyltrimethoxysilane, octenyltrimethoxysilane, divinyldimethoxysilane.

Examples of haloalkoxysilane compounds include trimethoxychlorosilane, triethoxychlorosilane, tri-n-propoxychlorosilane, tri-n-butoxychlorosilane, triphenoxychlorosilane, dimethoxydichlorosilane, diethoxydichlorosilane, di-n-propoxydichlorosilane, diphenoxydichlorosilane, methoxytrichlorosilane, ethoxytrichlorosilane, n-propoxytrichlorosilane, phenoxytrichlorosilane, trimethoxybromosilane, triethoxybromosilane, tri-n-propoxybromosilane, triphenoxybromosilane, dimethoxydibromosilane, diethoxydibromosilane, di-n-propoxydibromosilane, diphenoxydibromosilane, methoxytribromosilane, ethoxytribromosilane, n-propoxytribromosilane, phenoxytribromosilane, trimethoxyiodosilane, triethoxyiodosilane, tri-n-propoxyiodosilane, triphenoxyiodosilane, dimethoxydiiodosilane, di-n-propoxydiiodosilane, diphenoxydiiodosilane, methoxytriiodosilane, ethoxytriiodosilane, n-propoxytriiodosilane, phenoxytriiodosilane.

Other useful silanes include bis-(trimethoxysilane)-ether, 3-mercaptopropyltriethoxysilane, 3-mercaptopropyltrimethoxysilane, 3,3'-bis (triethoxysilylpropyl) disulfide, Si-69 (bis-(3-triethoxysilylpropyl) tetrasulfide).

Preferred hydroalkyoxy silane terminating agents include tetraethyl orthosilicate.

In one embodiment, siliceous aggregate is generally characterized by including at least 30% by weight, in another embodiment at least at least 40% by weight, in still another embodiment at least 50% by weight, in yet another embodiment at least 60% by weight, in another embodiment at least 70% by weight, in still another embodiment at least 80% by weight, and in yet another embodiment at least 90% by weight silica (i.e., silicon dioxide). Exemplary siliceous aggregates including sandstone, granite, quartzite, flint, and diatomite.

Besides the use of the functionalized block copolymer and the siliceous aggregate, the asphalt concretes of this embodiment may be prepared in a conventional manner. Accordingly, in one embodiment, the functionalized block copolymer is added to an asphalt in order to prepare a modified asphalt composition. Virtually any type of asphalt can be employed in making the modified asphalt of this embodiment. Asphalt has been generically disclosed above; asphalt is also generically disclosed in U.S. Patent Nos. 4,145,322, 5,955,537, and 5,986,010 and U.S. Publication Nos. 2003/0191212 A1.

This modified asphalt, which includes the functionalized block copolymer, is then combined with the siliceous aggregate to form the asphalt concrete of this embodiment. As is conventional in the art, the modified asphalt and/or asphalt concrete may include other additives that are conventionally employed in the art including, but not limited to, curatives.

The methods employed to prepare either the modified asphalt or the asphalt concrete include those procedures that are conventional in the art and therefore the disclosure above with respect to the first embodiment is relied on for a description of these techniques.

The amount of functionalized block copolymer employed may vary. In one embodiment, and with reference to the preparation of a modified asphalt composition, the modified asphalt may include at least about 0.001% by weight, more preferably at least about 1.0% by weight, and even more preferably at least about 3.0% by weight of the functionalized block copolymer based on the entire weight of the modified asphalt composition; on the other hand, the modified asphalt composition preferably includes less than about 10% by weight, more preferably less than about 8% by weight, and even more preferably less than about 6% by weight of the functionalized block copolymer based upon the entire weight of the modified asphalt.

The amount of functionalized block copolymer may also be described with reference to the asphalt concrete. In one embodiment, the asphalt concrete includes preferably at least about 0.001% by weight, more preferably at least about 1.0% by weight, and even more preferably at least about 3.0% by weight functionalized block copolymer based upon the entire weight of the asphalt concrete; on the other hand, the asphalt concrete preferably includes less than about 10% by weight, more preferably less than about 8% by weight, and even more preferably less than about 6% by weight functionalized block copolymer based on the entire weight of the asphalt concrete.

The asphalt concrete preferably includes at least about 57% by weight, more preferably at least about 75% by weight, and even more preferably at least about 90% by weight of the siliceous aggregate based upon the entire weight of the asphalt concrete; on the other hand, the asphalt concrete preferably includes at less than about 99% by weight, more preferably less than about 95% by weight, and even more preferably less than about 93% by weight siliceous aggregate based on the entire weight of the asphalt concrete.

Practice of this embodiment does not generally alter the amount of other ingredients that are employed in the preparation of the modified asphalt or the asphalt concrete. For example, the asphalt concrete may include conventional amounts of asphalt, which are known in the art and are generally described hereinabove with respect to the first embodiment. The asphalt concrete may also include other aggregates that are known in the art including those described herein.

## Claims

1. A modified asphalt composition comprising:
a naphthenic asphalt; and
a block copolymer including a block comprising diene units **characterized by** having a vinyl content of at least 15% by weight.

2. The composition of claim 1, where the block copolymer comprises a diblock copolymer that comprises one block including vinyl aromatic units and one block comprising the diene units **characterized by** having a vinyl content of at least 15% by weight.

3. The composition of claim 2, where the block copolymer is substantially devoid of a tapered section.

4. The composition of claim 1, wherein the block copolymer further comprises a curing agent.

5. The block copolymer of claim 4, where said curing agent comprises one of the members of the group consisting of sulfur, ZnO, and stearic acid, or mixtures thereof.

6. An asphalt concrete comprising:
an asphalt;
a functionalized block copolymer; and
a siliceous aggregate.

7. The asphalt concrete of claim 6, where the functionalized block copolymer includes at least one diene block, at least one vinyl aromatic block, and at least one terminal functional group.

8. The asphalt concrete of claims 6 or 7, where the functionalized block copolymer is defined by the formula
α-π-θ-ω
where α comprises a hydrogen atom or a functional group, π comprises a diene block, θ comprises a vinyl aromatic block, and ω comprises a hydrogen atom or a functional group, wherein at least one of α or ω comprise a functional group.

9. The asphalt concrete of claim 8, where the at least one functional group comprises a silicon-containing group.

10. A diblock copolymer comprising:
a vinyl block comprising conjugated vinyl aromatic units;
a diene block comprising conjugated diene units and substantially devoid of a tapered block section between the vinyl block and the diene block wherein the diblock copolymer comprises a vinyl content of at least 20%, and a molecular weight of at least 50,000.

11. The diblock copolymer of claim 10, where the diblock copolymer comprises a molecular weight distribution of less than 1.2.

12. A method of preparing a diblock copolymer comprising:
anionically polymerizing a first charge of diene monomer with a functionalized initiator in the presence of a vinyl modifier thereby forming a polymer having a vinyl content, and whereby said polymerizing comprises consumption of substantially all of said diene monomer; and
polymerizing a second charge of vinyl aromatic monomer in the presence of said polymer forming a diblock copolymer comprising a diene block and a vinyl block, whereby said diblock copolymer comprises a vinyl content of at least 20%, and a molecular weight of at least 50,000.

13. The method of claim 12, where the consumption of said diene monomer comprises at least 90% of the first-polymerized monomer.

14. The method of claim 12, further comprising functionalizing the copolymer with a silicon-containing functional group of the formula
Si(R¹)₃
where each R¹ comprises one of the group consisting of hydrocarbyl, substituted hydrocarbyl, and alkoxy groups.

15. The composition of claim 1, wherein the block comprising diene units is **characterized by** having a vinyl content of at least 20% by weight.

16. The composition of claim 1, wherein the block comprising diene units is **characterized by** having a vinyl content of at least 23% by weight.

17. The composition of claim 1, wherein the block comprising diene units is **characterized by** having a vinyl content of at least 25% by weight.

18. The composition of claim 1, wherein the block comprising diene units is **characterized by** having a vinyl content of at least 27% by weight.

19. The composition of claim 1, where in the block comprising diene units is **characterized by** having a vinyl content of at least 27% by weight and less than 34% by weight.

## Patentansprüche

1. Modifizierte Asphaltzusammensetzung, umfassend:
einen naphthenischen Asphalt und
ein Blockcopolymer, das einen Block einschließt, umfassend Dieneinheiten, **gekennzeichnet, durch** einen Vinylgehalt von mindestens 15 Gew.-%.

2. Zusammensetzung nach Anspruch 1, wobei das Blockcopolymer ein Diblockcopolymer umfasst, das einen Block, der vinylaromatische Einheiten einschließt, und einen Block, umfassend die Dieneinheiten, umfasst, **gekennzeichnet, durch** einen Vinylgehalt von mindestens 15 Gew.-%.

3. Zusammensetzung nach Anspruch 2, wobei das Blockcopolymer im Wesentlichen frei von einem konischen Abschnitt ist.

4. Zusammensetzung nach Anspruch 1, wobei das Blockcopolymer weiterhin ein Härtungsmittel umfasst.

5. Blockcopolymer nach Anspruch 4, wobei das Härtungsmittel eines der Mitglieder der Gruppe, bestehend aus Schwefel, ZnO und Stearinsäure oder Gemischen davon, umfasst.

6. Asphaltbeton, umfassend
einen Asphalt,
ein funktionalisiertes Blockcopolymer und
ein siliciumdioxidhaltiges Aggregat.

7. Asphaltbeton nach Anspruch 6, wobei das funktionalisierte Blockcopolymer mindestens einen Dienblock, mindestens einen vinylaromatischen Block und mindestens eine terminale funktionelle Gruppe einschließt.

8. Asphaltbeton nach den Ansprüchen 6 oder 7, wobei das funktionalisierte Blockcopolymer durch die Formel
α-π-θ-ω
definiert ist, wobei α ein Wasserstoffatom oder eine funktionelle Gruppe umfasst, π einen Dienblock umfasst, θ einen vinylaromatischen Block umfasst und ω ein Wasserstoffatom oder eine funktionelle Gruppe umfasst, wobei mindestens eines von α oder ω eine funktionelle Gruppe umfasst.

9. Asphaltbeton nach Anspruch 8, wobei die mindestens eine funktionelle Gruppe eine Silicium enthaltende Gruppe umfasst.

10. Diblockcopolymer, umfassend:
einen Vinylblock, umfassend konjugierte vinylaromatische Einheiten,
einen Dienblock, umfassend konjugierte Dieneinheiten, und im Wesentlichen frei von einem konischen Blockabschnitt zwischen dem Vinylblock und dem Dienblock, wobei das Diblockcopolymer einen Vinylgehalt von mindestens 20% und ein Molekulargewicht von mindestens 50.000 umfasst.

11. Diblockcopolymer nach Anspruch 10, wobei das Diblockcopolymer eine Molekulargewichtsverteilung von weniger als 1,2 umfasst.

12. Verfahren zum Herstellen eines Diblockcopolymers, umfassend:
anionisches Polymerisieren einer ersten Charge eines Dienmonomers mit einem funktionalisierten Starter in Gegenwart eines Vinylmodifizierungsmittels, wobei **dadurch** ein Polymer mit einem Vinylgehalt gebildet wird, und wobei das Polymerisieren den Verbrauch von im Wesentlichen dem Gesamten des Dienmonomers umfasst, und
Polymerisieren einer zweiten Charge eines vinylaromatischen Monomers in Gegenwart des Polymers, wobei ein Diblockcopolymer gebildet wird, umfassend einen Dienblock und einen Vinylblock, wobei das Diblockcopolymer einen Vinylgehalt von mindestens 20 Gew.-% und ein Molekulargewicht von mindestens 50.000 umfasst.

13. Verfahren nach Anspruch 12, wobei der Verbrauch des Dienmonomers mindestens 90% des zuerst polymerisierten Monomers umfasst.

14. Verfahren nach Anspruch 12, weiterhin umfassend Funktionalisieren des Copolymers mit einer Silicium enthaltenden funktionellen Gruppe der Formel
Si(R¹)₃
worin jedes R¹ eine aus der Gruppe, bestehend aus Hydrocarbyl-, substituierten Hydrocarbyl- und Alkoxygruppen, umfasst.

15. Zusammensetzung nach Anspruch 1, wobei der Block, umfassend Dieneinheiten, **dadurch gekennzeichnet ist, dass** er einen Vinylgehalt von mindestens 20 Gew.-% aufweist.

16. Zusammensetzung nach Anspruch 1, wobei der Block, umfassend Dieneinheiten, **dadurch gekennzeichnet ist, dass** er einen Vinylgehalt von mindestens 23 Gew.-% aufweist.

17. Zusammensetzung nach Anspruch 1, wobei der Block, umfassend Dieneinheiten, **dadurch gekennzeichnet ist, dass** er einen Vinylgehalt von mindestens 25 Gew.-% aufweist.

18. Zusammensetzung nach Anspruch 1, wobei der Block, umfassend Dieneinheiten, **dadurch gekennzeichnet ist, dass** er einen Vinylgehalt von mindestens 27 Gew.-% aufweist.

19. Zusammensetzung nach Anspruch 1, wobei der Block, umfassend Dieneinheiten, **dadurch gekennzeichnet ist, dass** er einen Vinylgehalt von mindestens 27 Gew.-% und weniger als 34 Gew.-% aufweist.

## Revendications

1. Composition asphaltique modifiée comprenant:
- un asphalte naphténique et
- un copolymère à blocs comprenant des unités diéniques **caractérisé en ce qu'**il a une teneur en vinyle d'au moins 15% en poids.

2. Composition selon la revendication 1, dans laquelle le copolymère à blocs comprend un copolymère à deux blocs qui comprend un bloc comprenant des unités vinyle aromatiques et un bloc comprenant des unités diéniques **caractérisé en ce qu'**il a une teneur en vinyle d'au moins 15 % en poids.

3. Composition selon la revendication 2, dans laquelle le copolymère à blocs est essentiellement libre d'une partie à gradient.

4. Composition selon la revendication 1, dans laquelle le copolymère à blocs comprend en outre un agent durcissant.

5. Copolymère à blocs selon la revendication 4, dans lequel l'agent durcissant comprend l'un des membres du groupe consistant en le soufre, ZnO et l'acide stéarique ou les mélanges de ceux-ci.

6. Béton asphaltique comprenant:
- un asphalte;
- un copolymère à blocs fonctionnalisé
- et un agrégat silicieux.

7. Béton asphaltique selon la revendication 6, dans lequel le copolymère à blocs fonctionnalisé comprend au moins un bloc diénique, au moins un bloc vinyle aromatique et au moins un groupe terminal fonctionnalisé.

8. Béton asphaltique selon la revendication 6 ou 7, dans lequel le copolymère à blocs fonctionnalisé est défini par la formule
α-π-θ-ω
dans laquelle α comprend un atome d'hydrogène ou an groupe fonctionnel, π comprend un bloc diénique, θ comprend un bloc vinyle aromatique et ω comprend un atome d'hydrogène ou un groupe fonctionnel, dans laquelle au moins l'un de α ou ω comprend un groupe fonctionnel.

9. Béton asphaltique selon la revendication 8, dans lequel au moins un groupe fonctionnel comprend un groupe contenant du silicium.

10. Copolymère à deux blocs comprenant:
- un bloc vinylique comprenant des unités vinyle aromatiques conjuguées;
- un bloc diénique comprenant des unités diéniques conjuguées et essentiellement libre d'une partie à gradient entre le bloc vinylique et le bloc diénique, le copolymère à deux blocs comprenant une teneur en vinyle d'au moins 20 % en poids et une masse moléculaire relative d'au moins 50 000.

11. Copolymère à deux blocs selon la revendication 10, le copolymère à deux blocs comprenant une distribution de la masse moléculaire d'inférieur à 1,2.

12. Procédé de production d'un copolymère à deux blocs comprenant les étapes consistant à
- polymériser anioniquement une première charge d'un monomère diénique avec un initiateur fonctionnalisé en présence d'un agent modificateur de vinyle pour former un polymère ayant une teneur en vinyle, et dans lequel la polymérisation comprend la consommation d'essentiellement tous les monomères diéniques et
- polymériser une deuxième charge d'un monomère vinyle aromatique en présence dudit polymère à formant un copolymère à deux blocs comprenant un bloc diénique et un bloc vinylique, ledit copolymère a deux blocs comprenant une teneur en vinyle d'au moins 20 % et une masse moléculaire relative d'au moins 50 000.

13. Procédé selon la revendication 12, dans lequel la consommation du monomère diénique comprend au moins 90 % du monomère polymérisé en premier.

14. Procédé selon la revendication 12 comprenant en outre l'étape consistant à fonctionnaliser le copolymère par un groupe fonctionnel contenant du silicium ayant la formule
Si(R¹)₃
dans laquelle chacun R¹ comprend l'un du groupe consistant en les groupes hydrocarbyle, hydrocarbyle substitué et alcoxy.

15. Composition selon la revendication 1, dans laquelle le bloc comprenant des unités diéniques est **caractérisé en ce qu'**il a une teneur en vinyle d'au moins 20 % en poids.

16. Composition selon la revendication 1, dans laquelle le bloc comprenant des unités diéniques est **caractérisé en ce qu'**il a une teneur en vinyle d'au moins 23 % en poids.

17. Composition selon la revendication 1, dans laquelle le bloc comprenant des unités diéniques est **caractérisé en ce qu'**il a une teneur en vinyle d'au moins 25 % en poids.

18. Composition selon la revendication 1, dans laquelle le bloc comprenant des unités diéniques est **caractérisé en ce qu'**il a une teneur en vinyle d'au moins 27 % en poids.

19. Composition selon la revendication 1, dans laquelle le bloc comprenant des unités diéniques est **caractérisé en ce qu'**il a une teneur en vinyle d'au moins 27 % en poids et inférieur à 34 % en poids.
